# EUROPÄISCHE PATENTSCHRIFT

(11) **EP 0 336 509 B1**
(45) Veröffentlichungstag und Bekanntmachung des Hinweises auf die Patenterteilung: **29.09.1993**
(21) Anmeldenummer: 89200828.5
(22) Anmeldetag: 31.03.1989
(51) Int. Cl.: H04N 7/137

(54) **Hybrid-Codierer für Videosignale**
Hybrid encoder for video signals
Codeur hybride pour signaux vidéos

(30) Priorität: 06.04.1988 DE 3811535
(43) Veröffentlichungstag der Anmeldung: 11.10.1989
(73) Patentinhaber: Philips Patentverwaltung GmbH, 22335 Hamburg (DE); Philips Electronics N.V., 5621 BA Eindhoven (NL)
(72) Erfinder: Hienerwadel, Klaus, D-8500 Nürnberg (DE); Weth, Gerald, Dipl.-Ing., D-8500 Nürnberg (DE)
(74) Vertreter: Peuckert, Hermann, Dipl.-Ing.

(56) Entgegenhaltungen:
- EP-A- 0 279 800
- US-A- 4 672 441
- US-A- 4 816 906

## Beschreibung

Die Erfindung betrifft einen Hybrid-Codierer für Videobilder, bei dem benachbarte Bildpunkte eines Videobildes zu Teilblöcken zusammengefaßt sind mit einem Bewegungsschätzer und mit einem Inter-Intra-Bildentscheider.

Ein solcher Hybrid-Codierer ist z.B. aus UPDATED SPECIFICATION FOR THE FLEXIBLE PROTOTYPE n x 384 kbit/s VIDEO CODEC, CCITT SGXV, Working Party XV/1, Specialists Group on Coding for Visual Telephony, Document #249, July 1987, bekannt. Ein Hybrid-Codierer ermöglicht es, die von einer Video-Datenquelle kommenden Videodaten mit geringem Informationsverlust in ein Signal mit geringerer Bitrate umzucodieren. Bei diesem Vorgang werden zwei Codierungsprinzipien - daher der Name Hybrid-Codierer - angewandt: Das Interframe-Prinzip und das Intraframe-Prinzip.

Beim Interframe-Prinzip wird die Korrelation zwischen zeitlich aufeinanderfolgenden Videobildern (diese Bezeichnung wird hier für Voll- und Teilbilder verwendet) ausgenutzt. Hierzu werden die zu codierenden Videodaten mit Schätzwerten verglichen und nur die Signaldifferenzen zwischen diesen beiden Signalen codiert und übertragen. Je besser die Schätzwerte mit den zu codierenden Videodaten übereinstimmen, um so geringer ist die Bitrate des zu übertragenden Signals. Beim Intraframe-Prinzip wird der Originalinhalt eines Videobildes übertragen, wobei eine Bitratenreduzierung beispielsweise durch einen adaptiven Quantisierer erzielt wird.

Aus der eingangs genannten Veröffentlichung ist es weiterhin bekannt, Schätzwerte mit einem Bewegungsschätzer zu bilden. Bei Videobildern mit bewegten Szenen haben aufeinanderfolgende Videobilder einen vergleichbaren Bildinhalt. Einige Teile der Bildinhalte zweier aufeinanderfolgender Videobilder ändern sich überhaupt nicht (zum Beispiel unbewegter Hintergrund), andere Teile des Bildinhaltes wechseln lediglich im aktuellen Bild gegenüber dem vorangegangenen Bild ihre Position (zum Beispiel Mundbewegung einer sprechenden Person) und andere Teile sind völlig neu gegenüber dem vorangegangenen Bild. Ändern sich bei einer Bewegung weder Helligkeit noch Farbinhalt eines verschobenen Bildausschnittes, so kann die Stelle, an der dieser Bildausschnitt in dem darauffolgenden Videobild auftritt, durch einen Vektor ausreichend gekennzeichnet werden. Da die Codierung eines solchen Vektors weit weniger Codierungsdaten beansprucht als die Codierung des gesamten Bildausschnittes, kann auf diese Weise die Bitrate reduziert werden.

In einem Bildspeicher ist hierzu jeweils das zum aktuellen Videobild vorangegangene Videobild gespeichert. Ein Videobild ist matrixartig aus einer Aneinanderreihung von Bildpunkten aufgebaut. Jeder Bildpunkt ist durch drei Zahlenwerte darstellbar. Der erste Zahlenwert ist ein Maß für die Helligkeit des Bildpunktes (im folgenden als Luminanzwert bezeichnet). Der zweite und dritte Zahlenwert eines Bildpunktes repräsentiert die Farbe des Bildpunktes (im folgenden als Chrominanzwert bezeichnet). Das aktuelle Videobild wird in Teilblöcke unterteilt. Hierzu werden benachbarte Bildpunkte eines Videobildes zu einem Teilblock zusammengefaßt. Dieser Teilblock hat beispielsweise die Größe von acht x acht Bildpunkten und stellt einen flächenhaften Ausschnitt des Videobildes dar. Mittels einer Suchbereichsschaltung werden aus dem im Bildspeicher gespeicherten Videobild mehrere Teilblöcke ausgewählt, welche sich in der Nähe des aktuellen Teilblockes befinden. Diese Teilblöcke werden mit dem aktuellen Teilblock verglichen. Derjenige Teilblock, welcher sich vom aktuellen Teilblock am geringsten unterscheidet oder welcher im Idealfall identisch mit dem aktuellen Teilblock ist, wird als Schätzwert ausgewählt.

Die Übertragung des Bewegungsvektors und der Differenzen zwischen aktuellem Teilblock und als Schätzwert ausgewähltem Teilblock bietet nur dann Vorteile, wenn die Unterschiede zwischen aktuellem Teilblock und ausgewähltem Teilblock gering sind. Bei bestimmten Bildinhalten ist es unter Umständen günstiger gleich den gesamten Teilblock zu übertragen. Aus diesem Grund überprüft ein Inter-Intra-Entscheider mit welcher Methode jeweils der aktuelle Teilblock am günstigsten zu übertragen ist und betätigt entsprechende Signalwegumschalter.

Wegen der erforderlichen hohen Verarbeitungsgeschwindigkeit müssen Bewegungsschätzer und Inter-Intra-Bildentscheider im Hinblick auf die gegenwärtig verfügbaren Bauelemente eine parallel verarbeitende Stuktur aufweisen, was zu einem nicht unerheblichen Bauteileaufwand führt.

Der vorliegenden Erfindung liegt die Aufgabe zugrunde, einen Hybrid-Codierer der eingangs genannten Art so auszubilden, daß sich dessen Aufbau vereinfacht.

Diese Aufgabe wird bei einem gattungsgemäßen Hybrid-Codierer dadurch gelöst, daß Bewegungsschätzer und Inter-Intra-Bildentscheider zwei gleiche Berechnungsmodule gemäß Anspruch 1 bzw. ein gemeinsames Berechnungsmodul gemäß Anspruch 2 aufweisen.

Weitere vorteilhafte Ausgestaltungen der Erfindung sind Gegenstand der Unteransprüche.

Ein Ausführugnsbeispiel der Erfindung wird anhand der Zeichnung dargestellt und mit weiteren Einzelheiten beschrieben und erläutert.

Figur 1 zeigt einen Bewegungsschätzer.

Figur 2 zeigt einen Inter-Intra-Bildentscheider.

Figur 3 zeigt eine Kombination eines Bewegungsschätzers und eines Inter-Intra-Bildentscheiders.

Bewegungsschätzer und Inter-Intra-Bildentscheider sind Teil eines nicht dargestellten Hybrid-Codierers zur Übertragung von Videobildern. Der Bewegungsschätzer ermittelt aus Teilblöcken eines vorangegangenen Videobildes einen Teilblock, welcher sich unter den zur Auswahl anstehenden Teilblöcken am besten als Schätzwert für die Übertragung des aktuellen Teilblockes erweist. Der Inter-Intra-Bildentscheider entscheidet, ob die Datenmenge, die zur Übertragung des aktuellen Teilblockes mit Hilfe des als Schätzwert dienenden ausgewählten Teilblocks erforderlich ist geringer ist als die Datenmenge, die zur Übertragung des aktuellen Teilbocks im Ganzen erforderlich ist.

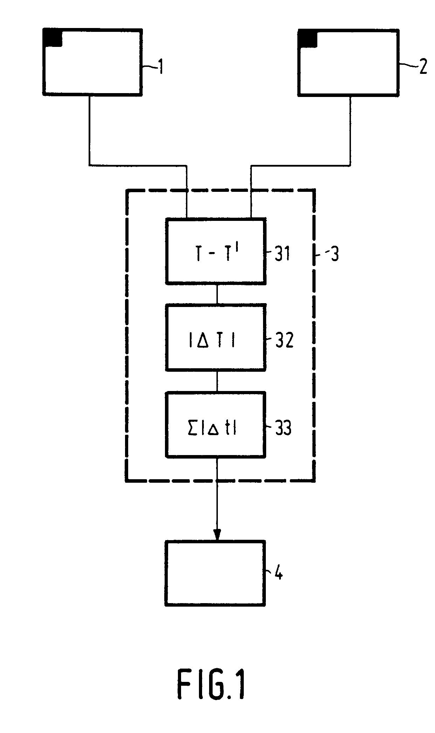

Der in der Figur 1 gezeigte Bewegungsschätzer besteht aus einem ersten und einem zweiten Bildspeicher 1, 2, einem Berechnungsmodul 3 und einem Minimalwertregister 4. Das Berechnungsmodul 3 setzt sich zusammen aus einem Subtrahierer 31, einem Absolutwertbildner 32 und einem Summierer 33.

In dem ersten Bildspeicher 1 ist das aktuelle Videobild und in dem zweiten Bildspeicher 2 jeweils das dem aktuellen Videobild vorangegangene Videobild gespeichert. Die Bildpunkte der Videobilder sind in bekannter Weise in Form der sie repräsentierenden Luminanz- und Chrominanzwerte als Binärwerte gespeichert. Ein zu übertragender Teilblock T des aktuellen Videobildes ist über eine nicht dargestellte Auswahlschaltung einem ersten Eingang des Berechnungsmoduls 3 zugeführt. Über eine ebenfalls nicht dargestellte Suchbereichsschaltung wird jeweils ein Teilblock T' des im zweiten Bildspeicher gespeicherten vorangegangenen Videobildes ausgewählt und einem zweiten Eingang des Berechnungsmoduls 3 zugeführt. Die Eingänge des Berechnungsmoduls sind jeweils mit einem ersten und zweiten Eingang des Subtrahierers 31 verbunden. Der Subtrahierer 31 subtrahiert die Werte der jeweils von der Position der jeweiligen Teilblöcke einander entsprechenden Luminanz- bzw. Chrominanzwerte. Die Differenzwerte werden dem Absolutbetragbildner 32 zugeführt, in welchem alle negativen Differenzwerte mit dem Wert -1 multipliziert werden. Auf diese Weise werden aus den Differenzwerten Differenzbeträge gewonnen, welche dem Eingang des Summierers 33 zugeführt werden. In dem Summierer 33 werden die Differenzbeträge der einzelnen Bildpunkte aufaddiert. Vor Beginn der jeweiligen Summation der einzelnen Beträge wird der Inhalt des Summierers durch einen Steuerimpuls gelöscht.

Die Ausgangswerte des Summierers 33 werden dem Minimalwertregister 4 zugeführt. Mit der Auswahl eines neuen aktuellen Teilblockes wird zugleich der Inhalt des Minimalwertregisters auf den größtmöglichen speicherbaren Wert gesetzt. Mittels einer Logikschaltung wird der jeweilige zum Minimalwertregister geführte Wert mit dem in dem Minimalwertregister 4 bereits gespeicherten Wert verglichen. Ist der neue Wert kleiner als ein bereits gespeicherter Wert so wird der neue Wert gespeichert, ist der neue Wert größer so wird der gespeicherte Wert nicht verändert. Jedesmal, wenn ein neuer Wert gespeichert wird, wird von der Logikschaltung ein Steuerimpuls erzeugt, welcher zu der Suchbereichsschaltung geführt wird. Mit diesem Steuerimpuls wird die für den gerade ausgewählten Teilblock des vorangegangenen Videobildes gebildete Adressierung, welche dem Bewegungsvektor entspricht, in einem nicht dargestellten Vektorregister gespeichert. Auf diese Weise wird unter den von dem zweiten Bildspeicher 2 zur Auswahl entnommenen Teilblöcken derjenige herausgesucht, welcher hinsichtlich der aufsummierten Differenzbeträge dem aktuellen Teilblock am ähnlichsten ist. Damit steht nach Durchlaufen aller ausgewählten Teilblöcke der optimale Bewegungsvektor im Vektorregister. Gleichzeitig ist die Summe der Differenzbeträge, welche im Minimalwertregister steht, ein Maß für die Länge des für eine Übertragung des aktuellen Teilblockes mit Hilfe dieses als Schätzwert dienenden ausgewählten Teilbockes erforderlichen Übertragungscode. Die Berechnung dieses Wertes ist zugleich schon Bestandteil der Inter-Intra-Bildentscheidung.

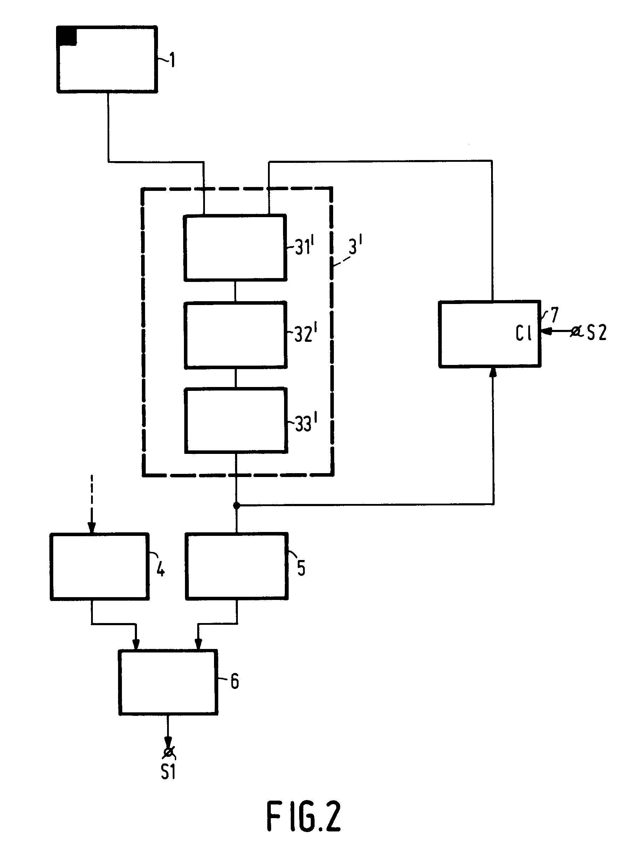

Figur 2 zeigt einen Inter-Intra-Bildentscheider, welcher mit einem zweiten Berechnungsmodul 3′ aufgebaut ist. Der Aufbau des zweiten Berechnungsmoduls 3′ unterscheidet sich nicht vom Aufbau des ersten Berechnungsmoduls 3, welches beim Bewegungsschätzer verwendet wird. Das zweite Berechnungsmodul besteht daher auch aus einem Subtrahierer 31′, einem Absolutwertbildner 32′ und einem Summierer 33′. Außerdem besteht der Inter-Intra-Bildentscheider aus dem Bildspeicher 1, dem Minimalwertregister 4, einem Mittelwertregister 5, einem Kennlinienentscheider 6 und einem Register 7. Ein Teilbild T des aktuellen Videobildes ist ebenso wie beim Bewegungsschätzer dem ersten Eingang des Berechnungsmoduls 3′ zugeführt. Der Ausgang des Berechnungsmoduls 3′ ist mit dem Mittelwertregister 5 verbunden. Das Minimalwertregister 4 ist das Minimalwertregister des bereits geschilderten Bewegungsschätzers.

Die Ausgänge des Minimalwertregisters 4 und des Mittelwertregisters 5 sind an Eingänge eines Kennlinienentscheiders 6 geführt. Der Kennlinienentscheider 6 ist im Ausführungsbeispiel als PROM ausgeführt. In Abhängigkeit der Ausgangswerte des Minimalwertregisters 4 und des Mittelwertregisters 5, die an seine Adresseingänge geführt sind, wird ein einziges Bit an einen Signalausgang S1 abgegeben. Durch dieses Bit werden in bekannter Weise die Signalwegumschalter des Hybrid-Codierers für eine Intra-Bildcodierung oder eine Inter-Bildcodierung entsprechend umgeschaltet.

Der Ausgang des Berechnungsmoduls 3′ ist ferner an den Eingang eines Registers 7 geführt. Das Register 7 ist so mit dem zweiten Eingang des Berechnungsmoduls 3 verbunden, daß der am zweiten Eingang des Subtrahierers 31 anstehende Wert gegenüber dem im Register 7 zwischengespeicherten Wert um ein Vierundsechzigstel geteilt ist. Das Register 7 besitzt einen weiteren Eingang Cl, über welchen durch ein Steuersignal S2 der Inhalt des Registers 7 auf Null gesetzt werden kann. Dieses Steuersignal wird durch eine nicht dargestellte Steuerschaltung erzeugt.

Bei der Berechnung des Aufwandes für die Übertragung des gesamten aktuellen Teilbocks wird der Mittelwert des aktuellen Teilblockes berechnet und dann die Differenzwerte zwischen dem aktuellen Teilblock und einem Teilblock, dessen Bildpunkte alle den berechneten Mittelwert aufweisen, bestimmt und aufsummiert. In vorteilhafter Weise kann für diese Berechnungen das aus dem Subtrahierer 31′, dem Absolutwertbildner 32′ und dem Summierer 33′ gebildete Berechnungsmodul 3′ verwendet werden. Hierzu werden mit diesem Berechnungsmodul 3′ in einem ersten Berechnungsschritt der Mittelwert des aktuellen Teilbockes bestimmt und in einem zweiten Berechnungsschritt die Differenzwerte zwischen dem aktuellen Teilbock und dem Mittelwert gebildet.

Zur Berechnung des Mittelwertes eines Teilblockes müssen zunächst alle Luminanz- beziehungsweise alle Chrominanzwerte der Bildpunkte eines Teilblockes aufaddiert werden. Da der aktuelle Teilblock jedoch zunächst dem Subtrahierer 31′ zugeführt ist, wird zunächst durch das Steuersignal S2 der Inhalt des Registers 7 auf Null gesetzt. Hierdurch steht an dem zweiten Eingang des Subtrahierers 31′ der Wert Null an. Auf diese Weise passieren die Werte der Bildpunkte den Subtrahierer 31′ ohne Änderung ihrer Werte, da von jedem Bildpunkt des aktuellen Teilblockes lediglich der Wert Null subtrahiert wird. Da alle Werte der Bildpunkte positiv sind, passieren sie auch den Abtastwertbildner 32′ ohne Änderung. Auf diese Weise steht am Ausgang des Summierers 33′ der aufsummierte Wert aller einzelnen Bildpunkte des aktuellen Teilblockes an. Dieser Wert wird in das Register 7 übernommen und dort durch vierundsechzig geteilt. Die Zahl vierundsechzig entspricht hierbei der Anzahl der Bildpunkte eines Teilblockes, so daß auf diese Weise das arithmetische Mittel der Bildpunkte eines Teilblockes gebildet wird. Die Division durch vierundsechzig ist im Ausführungsbeispiel durch die Verdrahtung der Ausgänge des Registers 7 realisiert, in dem die acht niedrigsten Ausgänge des Registers 7 offengelassen wurden. Der Ausgang des neunten Bits wurde an den Eingang des ersten Bits des Subtrahierers 31′, der Ausgang mit dem zehnten Bit an den Eingang mit dem zweiten Bit des Subtrahierers 31′ und so weiter gelegt.

Auf diese Weise steht im zweiten Berechnungsschritt am zweiten Eingang des Subtrahierers der Mittelwert des aktuellen Teilblockes an. Der Subtrahierer 31′ berechnet nun die Differenzen zwischen dem aktuellen Teilblock und dem arithmetischen Mittel des aktuellen Teilblockes. Von diesen Werten werden wieder die Absolutwerte gebildet und in dem Summierer 33′ aufsummiert. Das Ergebnis dieser Berechnung wird in dem Mittelwertspeicher 5 abgelegt. Anhand der im Minimalwertspeicher 4 und der im Mittelwertspeicher 5 gespeicherten Daten entscheidet der Kennlinienentscheider 6 in bekannter Weise, in welchem Fall die Übertragung eines Bewegungsvektors oder die Übertragung des gesamten Teilblocks vorteilhafter ist.

Durch diese Berechnung des Intra-Bildwertes in zwei Durchgängen erübrigt sich der Einsatz eines zusätzlichen Summierers für die Berechnung des Mittelwertes eines Teilblockes. Dies führt zu nicht unbeträchtlichen Einsparungen, da dieser Summierer wegen der hohen Verarbeitungsgeschwindigkeit ebenfalls als parallele Verarbeitungseinheit aufgebaut sein müßte. Besonders vorteilhaft ist dies, da für die Intra-Bildwertberechnung ebenfalls das gleiche Berechnungsmodul verwendet werden kann wie das für den Bewegungsschätzer verwendete Berechnungsmodul. Dies spart zum einen Entwicklungsaufwand für das Berechnungsmodul an sich, zum anderen ist dies ein wirtschaftlicher Vorteil, wenn das Berechnungsmodul als integrierte Schaltung gefertigt wird. Anstelle zweier verschiedener integrierter Schaltungen ist nur eine zu entwerfen, zu testen und zu produzieren. Es ist auf jeden Fall kostengünstiger von einer integrierten Schaltung die doppelte Menge herzustellen als zwei verschiedene integrierte Schaltungen herzustellen.

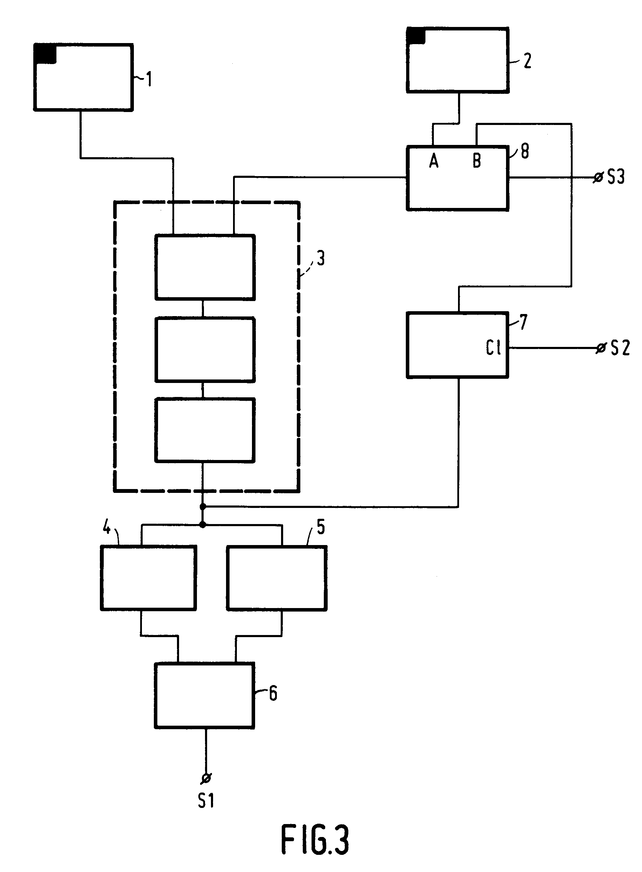

Figur 3 zeigt eine besonders vorteilhafte Ausführungsform der Erfindung. Die Figur 3 zeigt schematisch den Aufbau einer Kombination eines Bewegungsschätzers und eines Inter-Intra-Bildentscheiders mit nur einem einzigen Berechnungsmodul. Die gegenüber den Figuren 1 und 2 in ihrer Funktion gleichgebliebenen Baugruppen sind durch gleiche Bezugszeichen gekennzeichnet. Das Ausführungsbeispiel besteht aus einem ersten und einem zweiten Bildspeicher 1, 2, einem Berechnungsmodul 3, einem Minimalwertregister 4, einem Mittelwertregister 5, einem Kennlinienentscheider 6, einem Register 7 und einem Multiplexer 8. Der erste Eingang des Berechnungsmoduls ist über eine nicht dargestellte Ansteuerschaltung mit dem ersten Bildspeicher 1 verbunden. Der Ausgang des Berechnungsmoduls 3 ist an die Eingänge des Minimalwertspeichers 4 und des Mittelwertregisters 5 geführt. Durch Steuerbefehle einer nicht dargestellten Steuerschaltung werden die Ausgangswerte des Berechnungsmoduls 3 wahlweise in dem Minimalwertregister 4 oder in dem Mittelwertregister 5 gespeichert. Die Ausgangswerte des Minimalwertregisters 4 und des Mittelwertregisters 5 sind an die Eingänge des Kennlinienentscheiders 6 geführt. Der Ausgang des Berechnungsmoduls 3 ist weiterhin an den Eingang des Registers 7 geführt, dessen Ausgang an einen zweiten Eingang B eines Multiplexers 8 geführt ist. Ein erster Eingang A des Multiplexers ist über eine nicht dargestellte Suchbereichsschaltung mit dem zweiten Bildspeicher 2 verbunden. Der Ausgang des Multiplexers ist mit dem zweiten Eingang des Berechnungsmoduls 3 verbunden. Durch einen Steuerimpuls S3 einer nicht dargestellten Steuerschaltung wird wahlweise der Eingang A oder der Eingang B mit dem Ausgang des Multiplexers verbunden.

Je nach den von der nicht dargestellten Steuerschaltung erzeugten Steuerimpulsen arbeitet die dargestellte Schaltungsanordnung wahlweise als Bewegungsschätzer oder als Inter-Intra-Bildentscheider. Ist durch den Steuerimpuls S2 der Eingang A des Multiplexers mit dem Ausgang des Multiplexers 8 verbunden, so entspricht diese Schaltung vollkommen dem in Figur 1 dargestellten Bewegungsschätzer. Wird durch das Steuersignal S2 hingegen der Eingang B des Multiplexers mit dem Ausgang des Multiplexers 8 verbunden, so entspricht die in Figur 3 gezeigte Schaltung vollkommen dem in Figur 2 gezeigten und erläuterten Inter-Intra-Bildentscheider. Auf diese Weise ist es möglich, das dargestellte Ausführungsbeispiel quasi im Zeitmultiplexbetrieb wahlweise als Bewegungsschätzer oder als Inter-Intra-Bildentscheider arbeiten zu lassen, wobei nur ein einziges Berechnungsmodul 3 benötigt wird. Dies ist besonders vorteilhaft, weil gerade das Berechnungsmodul 3 wegen seines komplizierten Aufbaus einen großen Anteil am Entwicklungsaufwand und am Gesamtpreis eines Hybrid-Codierers aufweist.

## Patentansprüche

1. Hybrid-Codierer für Video-Bilder, bei dem benachbarte Bildpunkte eines Videobildes zu Teilblöcken zusammengefaßt sind, mit einem ersten Bildspeicher (1) zur Speicherung aktueller Bilder und einem zweiten Bildspeicher (2) zur Speicherung der den aktuellen Bildern vorangegangener Bilder, mit einem Bewegungsschätzer und mit einem Inter-Intra-Bildentscheider,
dadurch gekennzeichnet,
daß zwei gleiche Berechnungsmodule (3,3') mit jeweils einem ersten und einem zweiten Eingang und einem Ausgang vorgesehen sind, wobei das erste Berechnungsmodul (3) dem Bewegungsschätzer und das zweite Berechnungsmodul (3') dem Inter-Intra-Bildentscheider Zugeordnet ist, wobei jedes Berechnungsmodul (3,3') einen Subtrahierer (31) enthält, dessen Ausgang über einen Absolutwertbildher (32) einem Summierer (32) zuführbar ist, wobei vorgesehen ist:
- dem ersten Berechnungsmodul (3) am ersten Eingang den jeweils aktuellen Teilblock (T) und am zweiten Eingang einen zum aktuellen Teilblock (T) vorangegangenen Teilblock (T') zuzuführen, und
- dem zweiten Berechnungsmodul (3') am ersten Eingang den jeweils aktuellen Teilblock (T) und am zweiten Eingang den Mittelwert des aktuellen Teilblocks zuzuführen.

2. Hybrid-Codierer für Video-Bilder, bei dem benachbarte Bildpunkte eines Videobildes zu Teilblöcken zusammengefaßt sind, mit einem ersten Bildspeicher (1) zur Speicherung aktueller Bilder und einem zweiten Bildspeicher (2) zur Speicherung der den aktuellen Bildern vorangegangener Bilder, mit einem Bewegungsschätzer und mit einem Inter-Intra-Bildentscheider,
dadurch gekennzeichnet,
daß ein Berechnungsmodul (3) mit einem ersten und einem zweiten Eingang und einem Ausgang vorgesehen ist, wobei das Berechnungsmodul (3) einen Subtrahierer (31) enthält, dessen Ausgang über einen Absolutwertbildner (32) einem Summierer (32) zuführbar ist, wobei vorgesehen ist dem Berechnungsmodul (3) am ersten Eingang den jeweils aktuellen Teilblock (T) und am zweiten Eingang wahlweise einen zum aktuellen Teilblock (T) vorangegangenen Teilblock (T') oder den Mittelwert des aktuellen Teilblocks zuzuführen.

3. Hybrid-Codierer nach Anspruch 1 oder 2,
dadurch gekennzeichnet,
daß dem zweiten Eingang des Berechnungsmoduls der Wert Null zuführbar ist.

4. Hybrid-Codierer nach Anspruch 1, 2 oder 3,
dadurch gekennzeichnet,
daß zwischen zweiten Eingang und dem Ausgang des Berechnungsmoduls (3' bzw. 3) ein Register (7) angeordnet ist, dessen Ausgangswert um einen vorgebbaren Faktor gegenüber dem Eingangswert des Registers verminderbar ist.

5. Hybrid-Codierer nach Anspruch 4,
dadurch gekennzeichnet,
daß der Faktor der Anzahl der Bildpunkte eines Teilblocks entspricht.

## Claims

1. A hybrid encoder for video pictures in which neighbouring pixels of a video picture are combined to sub-blocks, which encoder comprises a first picture memory (1) for storing actual pictures and a second picture memory (2) for storing pictures which have preceded the actual pictures, a motion estimator and an inter-intraframe encoding selector, characterized in that two equal calculation modules (3, 3') each having a first and a second input and an output are provided, the first calculation module (3) being associated with the motion estimator and the second calculation module (3') being associated with the inter-intraframe encoding selector, each calculation module (3, 3') comprising a subtracter (31) whose output signal can be applied to a summing device (33) via a device (32) for forming an absolute value,
- the respective actual sub-block (T) being applied to the first input and a sub-block (T') which has preceded the actual sub-block (T) being applied to the second input of the first calculation module (3), and
- the respective actual sub-block (T) being applied to the first input and the mean value of the actual sub-block being applied to the second input of the second calculation module (3').

2. A hybrid encoder for video pictures in which neighbouring pixels of a video picture are combined to sub-blocks, which encoder comprises a first picture memory (1) for storing actual pictures and a second picture memory (2) for storing pictures which have preceded the actual pictures, a motion estimator and an inter-intraframe encoding selector, characterized in that a calculation module (3) having a first and a second input and an output is provided, said calculation module (3) comprising a subtracter (31) whose output signal can be applied to a summing device (33) via a device (32) for forming an absolute value, the respective actual sub-block (T) being applied to the first input and either a sub-block (T') which has preceded the actual sub-block (T) or the mean values of the actual sub-block being selectively applied to the second input of the calculation module (3).

3. A hybrid encoder as claimed in Claim 1 or 2, characterized in that the zero value can be applied to the second input of the calculation module.

4. A hybrid encoder as claimed in Claim 1, 2 or 3, characterized in that a register (7), whose output value can be reduced by a predetermined factor with respect to the input value of the register, is arranged between the second input and the output of the calculation module (3', 3).

5. A hybrid encoder as claimed in Claim 4, characterized in that the factor corresponds to the number of pixels of a sub-block.

## Revendications

1. Codeur hybride pour images vidéo, dans lequel des pixels voisins d'une image vidéo sont regroupés en blocs partiels, comportant une première mémoire image (1) pour stocker les images actuelles et une seconde mémoire image (2) pour stocker les images précédant les images actuelles, un dispositif d'évaluation de mouvement et un dispositif de décision d'image inter/intra, caractérisé en ce que deux modules de calcul identiques (3, 3') sont prévus chacun avec une première et une seconde entrée et une sortie, le premier module de calcul (3) étant affecté au dispositif d'évaluation de mouvement et le second module de calcul (3') étant affecté au dispositif de décision d'image inter/intra, chaque module de calcul (3, 3') contenant un soustracteur (31), dont la sortie peut être acheminée à un totalisateur (32) via un formateur de valeurs absolues (32), étant entendu qu'il est prévu :
- d'acheminer au premier module de calcul (3) à la première entrée, le bloc partiel actuel en question (T) et à la seconde entrée un bloc partiel (T) précédant le bloc partiel actuel (T'), et
- d'acheminer au second module de calcul (3'), à la première entrée, le bloc partiel actuel en fonction (T) et, à la seconde entrée, la valeur moyenne du bloc partiel actuel.

2. Codeur hybride pour images vidéo, dans lequel des pixels voisins d'une image vidéo sont regroupés en blocs partiels, comportant une première mémoire image (1) pour stocker les images actuelles et une seconde mémoire image (2) pour stocker les images précédant les images actuelles, un dispositif d'évaluation de mouvement et un dispositif de décision d'image inter/intra, caractérisé en ce qu'un module de calcul (3) est doté d'une première et d'une seconde entrée et d'une sortie, le module de calcul (3) contenant un soustracteur (31) dont la sortie peut être acheminée à un totalisateur (32) via un formateur de valeurs absolues (32), étant entendu qu'il est prévu d'acheminer au module de calcul (3), à la première entrée, le bloc partiel actuel en question (T) et, à la seconde entrée, au choix, un bloc partiel (T') précédant le bloc partiel actuel (T) ou la valeur moyenne du bloc partiel actuel.

3. Codeur hybride selon la revendication 1 ou 2, caractérisé en ce que la valeur zéro peut être acheminée à la seconde entrée du module de calcul.

4. Codeur hybride selon la revendication 1, 2 ou 3, caractérisé en ce qu'entre la seconde entrée et la sortie du module de calcul (3' ou 3) est installé un registre (7) dont la valeur de sortie peut être diminuée d'un facteur prédéfinissable par rapport à la valeur d'entrée du registre.

5. Codeur hybride selon la revendication 4, caractérisé en ce que le facteur correspond au nombre de pixels d'un bloc partiel.
